# EUROPEAN PATENT APPLICATION

(11) **EP 4 723 599 A1**
(43) Date of publication of application: **08.04.2026**
(21) Application number: 24814057.6
(22) Date of filing: 26.04.2024
(51) Int. Cl.: H04L 67/1012, H04L 67/131

(54) **CLOUD XR SERVER SELECTION METHOD, DEVICE, APPARATUS, AND STORAGE MEDIUM**

(30) Priority: 01.06.2023 CN 202310645780
(71) Applicant: Datang Mobile Communications Equipment Co., Ltd., Beijing 100085 (CN)
(72) Inventor: LU, Jie, Beijing 100085 (CN); XIONG, Chunshan, Beijing 100085 (CN)
(74) Representative: Studio Torta S.p.A.
(86) International application number: PCT/CN2024/090063
(87) International publication number: WO 2024/244851

(57) **Abstract**

The embodiments of the present application provide a cloud XR server selection method, a device, an apparatus, and a storage medium. The method comprises: a terminal receiving a terminal policy sent by an AMF, the terminal policy comprising terminal capabilities required by an XR application; and according to the terminal capabilities required by the XR application, matching the terminal capabilities to a detected XR application, and according to the matching results, selecting a cloud XR server for processing the detected XR application.

## Description

### CROSS-REFERENCES TO RELATED APPLICATIONS

The present application claims priority to Chinese patent application No. 202310645780.4, filed on June 1, 2023, entitled "Cloud XR Server Selection Method, Device, Apparatus and Storage Medium", which is hereby incorporated by reference in its entirety.

### FIELD

The present application relates to the field of wireless communication, in particular to cloud extended reality (XR) server selection methods, devices, cloud XR server selection apparatuses, and storage media.

### BACKGROUND

It is an industry consensus that extended reality (XR) service has become a crucial application scenario for future network systems (such as 6G). Bringing capabilities required by XR applications, such as rendering, encoding and decoding, 3-dimensional (3D) stitching, and perception, into the cloud helps reduce user equipment (UE) configuration costs, lower requirements on UE performance and UE power consumption, and improve service quality and user experience.

Currently, for processing tasks like cloud XR rendering, the network assigns them to either an edge cloud XR server or a center cloud XR server for processing. This solution may lead to problems such as high XR service latency or waste of computing resources.

### BRIEF SUMMARY

To address the aforementioned deficiencies of the related art, according to embodiments of the present application, cloud extended reality, XR, server selection methods, devices, cloud XR server selection apparatuses, and storage media are provided.

An embodiment of the present application provides a cloud extended reality, XR, server selection method, performed by a user equipment, UE, including:
receiving a UE policy transmitted from an access and mobility management function, AMF, where the UE policy includes a UE capability required by an XR application; and
performing UE capability matching on a detected XR application based on the UE capability required by the XR application and selecting a cloud XR server for processing the detected XR application based on a matching result.

In some embodiments, selecting the cloud XR server for processing the detected XR application based on the matching result includes:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

In some embodiments, the UE policy further includes routing information of the cloud XR server, and the cloud XR server selection method further includes:
after selecting a cloud XR server for processing the detected XR application based on the matching result, associating the detected XR application with a protocol data unit, PDU, session based on the routing information of the cloud XR server.

In some embodiments, associating the detected XR application with the PDU session based on the routing information of the cloud XR server includes:
in case that there is an existing PDU session that matches routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

In some embodiments, the UE capability required by the XR application include one or more of:
a video rendering capability;
a 3-dimensional, 3D, stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the cloud XR server selection method further includes:
receiving UE policy container information transmitted from the AMF, where the UE policy container information includes an updated UE policy.

An embodiment of the present application provides a cloud extended reality, XR, server selection method, performed by a policy control function, PCF, including:
transmitting a user equipment, UE, policy to an access and mobility management function, AMF, where the UE policy includes a UE capability required by an XR application.

In some embodiments, the UE policy further includes routing information of the cloud XR server.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the cloud XR server selection method further includes:
acquiring the UE capability required by the XR application from user subscription data or from an application function, AF; or,
determining the UE capability required for the XR application based on a capability set required by general XR services.

In some embodiments, the cloud XR server selection method further includes:
acquiring the routing information of the cloud XR server from an application function, AF; or,
configuring the routing information of the cloud XR server based on user location information.

In some embodiments, the cloud XR server selection method further includes:
transmitting UE policy container information to the AMF, where the UE policy container information includes an updated UE policy.

An embodiment of the present application provides a user equipment, UE, including a memory, a transceiver, and a processor, where
the memory is used for storing a computer program; the transceiver is used for receiving and transmitting data under control of the processor; and the processor is used for reading the computer program in the memory and performing following operations:
receiving a UE policy transmitted from an access and mobility management function, AMF, where the UE policy includes a UE capability required by an XR application; and
performing UE capability matching on a detected XR application based on the UE capability required by the XR application and selecting a cloud XR server for processing the detected XR application based on a matching result.

In some embodiments, selecting the cloud XR server for processing the detected XR application based on the matching result includes:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

In some embodiments, the UE policy further includes routing information of the cloud XR server, and the operations further include:
after selecting the cloud XR server for processing the detected XR application based on the matching result, associating the detected XR application with a Protocol data unit, PDU, session based on the routing information of the cloud XR server.

In some embodiments, associating the detected XR application with a PDU session based on the routing information of the cloud XR server includes:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the operations further include:
receiving UE policy container information transmitted from the AMF, where the UE policy container information includes an updated UE policy.

An embodiment of the present application provides a policy control function, PCF, including a memory, a transceiver, and a processor, where
the memory is used for storing a computer program; the transceiver is used for receiving and transmitting data under control of the processor; and the processor is used for reading the computer program in the memory and performing following operations:
transmitting a user equipment, UE, policy to an access and mobility management function (AMF), where the UE policy includes a UE capability required by an XR application.

In some embodiments, the UE policy further includes routing information of a cloud XR server.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the operations further include:
acquiring the UE capability required by the XR application from user subscription data or from an application function,(AF; or,
determining the UE capability required by the XR application based on a capability set required by general XR services.

In some embodiments, the operations further include:
acquiring the routing information of the cloud XR server from an application function, AF; or,
configuring the routing information of the cloud XR server based on user location information.

In some embodiments, the operations further include:
transmitting UE policy container information to the AMF, where the UE policy container information includes an updated UE policy.

An embodiment of the present application provides a cloud extended reality, XR, server selection apparatus, including:
a receiving unit, used for receiving a user equipment, UE, policy transmitted from an access and mobility management function, AMF, where the UE policy includes a UE capability required by the XR application; and
a selecting unit, used for performing UE capability matching on a detected XR application based on the UE capability required by the XR application and selecting a cloud XR server for processing the detected XR application based on a matching result.

In some embodiments, selecting the cloud XR server for processing the detected XR application based on the matching result includes:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

In some embodiments, the UE policy further includes routing information of the cloud XR server, and the cloud XR server selection apparatus further includes:
an associating unit, used for associating the detected XR application with a protocol data unit, PDU, session based on the routing information of the cloud XR server, after selecting the cloud XR server for processing the detected XR application based on the matching result.

In some embodiments, associating the detected XR application with a PDU session based on the routing information of the cloud XR server includes:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the receiving unit is further used for:
receiving UE policy container information transmitted from the AMF, where the UE policy container information includes an updated UE policy.

An embodiment of the present application provides a cloud extended reality, XR, server selection apparatus, including:
a transmitting unit, used for transmitting a user equipment, UE, policy to an access and mobility management function, AMF, where the UE policy includes a UE capability required by the XR application.

In some embodiments, the UE policy further includes routing information of the cloud XR server.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the cloud XR server selection apparatus further includes:
a first acquiring unit, used for acquiring the UE capability required by the XR application from user subscription data or from an application function, AF; or,
determining the UE capability required by the XR application based on a capability set required by general XR services.

In some embodiments, the cloud XR server selection apparatus further includes:
a second acquiring unit, used for acquiring the routing information of the cloud XR server from an application function, AF; or,
configuring the routing information of the cloud XR server based on user location information.

In some embodiments, the transmitting unit is further used for:
transmitting UE policy container information to the AMF, where the UE policy container information includes an updated UE policy.

An embodiment of the present application provides a computer-readable storage medium storing a computer program, and the computer program is used to cause a computer to perform the cloud XR server selection method described above.

An embodiment of the present application provides a communication device storing a computer program, and the computer program is used to cause the communication device to perform the cloud XR server selection method described above.

An embodiment of the present application provides a processor-readable storage medium storing a computer program, and the computer program is used to cause the processor to perform the cloud XR server selection method described above.

An embodiment of the present application provides a chip product storing a computer program, and the computer program is used to cause the chip product to perform the cloud XR server selection method described above.

In the cloud XR server selection method, device, apparatus, and storage medium provided by the embodiments of the present application, by including a UE capability required by an XR application in a UE policy received by a UE, the UE may perform UE capability matching on a detected XR application to be processed based on the UE capability required by the XR application and select an appropriate cloud XR server for processing the detected XR application based on a matching result. The UE may select a cloud XR server to process an XR application according to its own capability, reducing the latency of XR services and the waste of computing resources.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a first schematic flowchart of a cloud extended reality (XR) server selection method according to an embodiment of the present application;
FIG. 2 is a second schematic flowchart of a cloud XR server selection method according to an embodiment of the present application;
FIG. 3 is a schematic flowchart of adding user equipment (UE) capability and edge cloud/center cloud information to a UE route selection policy (URSP) during a UE registration procedure according to an embodiment of the present application;
FIG. 4 is a schematic flowchart of adding UE capability and edge cloud/center cloud information during a procedure for updating a UE route selection (URSP) policy by a policy control function (PCF) according to an embodiment of the present application;
FIG. 5 is a schematic flowchart for a UE to process a virtual reality (VR) video application according to an embodiment of the present application;
FIG. 6 is a schematic flowchart for a UE to process a binaural rendering panoramic audio application according to an embodiment of the present application;
FIG. 7 is a schematic flowchart for a UE to process a cloud gaming application according to an embodiment of the present application;
FIG. 8 is a schematic flowchart for a UE to process an augmented reality (AR) application according to an embodiment of the present application;
FIG. 9 is a schematic structural diagram of a UE according to an embodiment of the present application;
FIG. 10 is a schematic structural diagram of a PCF according to an embodiment of the present application;
FIG. 11 is a first schematic structural diagram of a cloud XR server selection apparatus according to an embodiment of the present application; and
FIG. 12 is a second schematic structural diagram of a cloud XR server selection apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar thereto.

In the embodiments of the present application, the terms "first", "second", etc. are used for distinguishing similar objects, and are not used for describing a specific order or sequence. It should be understood that the terms used in this manner are interchangeable where appropriate, so that the embodiments of the present application may be implemented in an order other than those illustrated or described herein. The objects distinguished by "first" and "second" are generally of the same type and do not limit the number of objects, for example, the first object may be one or more.

The solutions in the embodiments of the present application are clearly and completely described in the following with reference to the drawings in the embodiments of the present application. The described embodiments are only part of the embodiments of the present application, not all of the embodiments. Based on the embodiments of the present application, all other embodiments obtained by those skilled in the art without making creative labor shall fall within the scope of protection of the present application.

In order to facilitate a clearer understanding of the solutions of the various embodiments of the present application, some technical contents related to the various embodiments of the present application are first introduced.

The cloud XR service architecture includes four components: a mobile communication network (such as the 5th generation mobile communication (5G) network), an edge cloud, a center cloud, and a UE.

The network built by the 5G system includes the Radio Access Network (RAN), carrying network and core network (Core). On the network side, it establishes end-to-end slicing to satisfy the bandwidth requirements of different XR services. Latency may be reduced by sinking the user plane function (UPF) and it may further reduced by providing capabilities such as forwarding hardware acceleration.

As for the XR service of the edge cloud, it requires the deployment of basic resources such as central processing units (CPUs), graphics processing units (GPUs), and storage, so that it has capabilities including rendering, encoding, 3-dimensional (3D) stitching, content delivery networks (CDNs), and perception, and provides agile capabilities for third-party applications.

As for the XR service of the center cloud, it requires the deployment of basic resources such as CPU, GPU, and storage, so that it possesses capabilities including rendering, encoding, 3D stitching, CDN, and perception. In addition, it also primarily carries the management capability of the XR service, such as user management, content operation, etc.

The XR on the UE side shall at least possesses capabilities including encoding and decoding, front-end device posture perception, and front-end device motion trajectory prediction. Besides supporting service capabilities, it also needs to collaborate with the network side and cloud edge side. Cloud XR UEs may be presented in two forms, where one with image decoding and head-motion rendering, capable of performing processing such as secondary rendering on the received images and finally display them on the screen, and the other functioning merely as a display device, significantly reducing the cost and size of the UE.

According to the real-time requirements of XR services, for example, film and television animation rendering urgently requires lower bandwidth costs, special effects rendering in live broadcast scenes urgently requires more real-time face tracking, and interaction in cloud gaming scenarios requires lower latency response. These scenarios not only require high-quality rendering effects but also need to ensure a real-time interactive experience, thus imposing higher performance requirements and lower latency requirements for computing power.

End-cloud asynchronous rendering is a key technology for real-time cloud rendering solutions. "Edge computing" provides versatile, efficient, and low-latency computing resources at a location closer to the user, which may greatly accelerate rendering efficiency, satisfying the needs of more scenarios and enabling the experience provided to users via edge cloud XR to be equivalent to that of local processing on the UE.

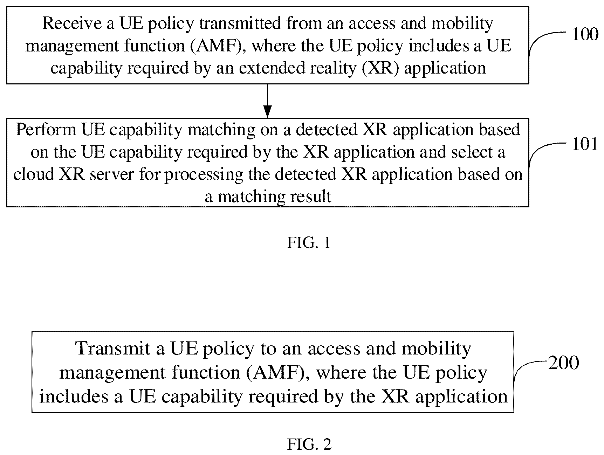

FIG. 1 is a first schematic flowchart of a cloud XR server selection method according to an embodiment of the present application. As shown in FIG. 1, the cloud XR server selection method is performed by a UE and includes the following steps.

At step 100, receive a UE policy transmitted from an access and mobility management function (AMF), where the UE policy includes a UE capability required by an XR application.

At step 101, perform UE capability matching on a detected XR application based on the UE capability required by the XR application and select a cloud XR server for processing the detected XR application based on a matching result.

In an embodiment, before processing the XR application, the UE may first receive the UE policy transmitted from the access and mobility management function (AMF). The UE policy may include the UE capability required by the XR application to instruct the UE to select an appropriate cloud XR server for processing the XR application.

In one embodiment, the services provided by the cloud XR server may match the UE capability required by the XR application. For example, the services provided by the cloud XR server may satisfy the requirements of the XR application.

The AMF in the embodiment of the present application may be the AMF in the 5G system, or a functionally equivalent network element in a future network system (e.g., a 6G system), which is not specifically limited here.

In some embodiments, the UE capability required by the XR application may include one or more of:
a video rendering capability;
a 3D stitching capability;
a binaural rendering panoramic audio capability;
a perception capability;
an environmental recognition capability; or
a 3D structure reconstruction capability.

In some embodiments, the UE capability required by the XR application may further include other UE capabilities required when processing the XR application, which are not specifically limited here.

After receiving the UE policy transmitted from AMF, the UE may perform UE capability matching on a detected XR application that need to be processed based on its own capabilities and the UE capability required by the XR application included in the UE policy, and select a cloud XR server for processing the detected XR application that need to be processed based on the matching result of the UE capability.

In one embodiment, after detecting that the XR application to be processed is a video application, the UE may acquire its own capabilities, perform UE capability matching on the UE capability required by the video application (such as video rendering capability) included in the UE policy, and select an appropriate cloud XR server for processing the video application based on the matching result.

In one embodiment, after detecting that the XR application to be processed is a binaural panoramic audio application, the UE may acquire its own capabilities, perform UE capability matching on the UE capability required by the binaural panoramic audio application (e.g., binaural rendering panoramic audio capability) included in the UE policy, and select an appropriate cloud XR server for processing the binaural panoramic audio application based on the matching result.

In one embodiment, after detecting that the XR application to be processed is a cloud gaming application, the UE may acquire its own capabilities, perform UE capability matching on the UE capability required by the cloud gaming application (e.g., video rendering capability, 3D stitching capability, and binaural rendering panoramic audio capability) included in the UE policy, and select an appropriate cloud XR server for processing the cloud gaming application based on the matching result.

In one embodiment, after detecting that the XR application to be processed is an application involving augmented reality (AR) services, the UE may acquire its own capabilities, perform UE capability matching on the UE capability required by the application involving the AR services (e.g., perception capability, environmental recognition capability and 3D structure reconstruction capability) included in the UE policy, and select an appropriate cloud XR server for processing the application involving the AR services based on the matching result. In the cloud XR server selection method according to the embodiments of the present application, by including a UE capability required by an XR application in a UE policy received by a UE, the UE may perform UE capability matching on a detected XR application to be processed based on the UE capability required by the XR application and select an appropriate cloud XR server for processing the detected XR application based on the matching result. The UE may select a cloud XR server to process an XR application based on its own capabilities, reducing the latency of XR services and the waste of computing resources.

In some embodiments, selecting the cloud XR server for processing the detected XR application based on the matching result includes:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

In an embodiment, the UE may select a cloud XR server to process the detected XR application based on the matching result between its own capabilities and the UE capability required by the XR application.

In an embodiment, the UE selects a center cloud XR server for processing the detected XR application only when it has all the UE capability required by the detected XR applications. In other cases, the UE selects an edge cloud XR server for processing the detected XR application.

For example, if the XR application detected by the UE is a cloud gaming application, the UE capability required by the XR application may be a video rendering capability, a 3D stitching capability, and a binaural rendering panoramic audio capability.

If the UE has a video rendering capability, a 3D stitching capability, and a binaural rendering panoramic audio capability, it selects a center cloud XR server for processing the cloud gaming application.

If the UE does not have at least one of a video rendering capability, a 3D stitching capability, and a binaural rendering panoramic audio capability, it selects an edge cloud XR server for processing the cloud gaming application.

In one embodiment, in case that the UE has at least one of the UE capabilities required for the detected XR application, it selects a center cloud XR server to process the detected XR application. In other cases, it selects an edge cloud XR server to process the detected XR application.

For example, if the XR application detected by the UE is an application involving the AR services, the UE capability required by the XR application may be a perception capability, an environmental recognition capability, and a 3D structure reconstruction capability.

If the UE has at least one of a perception capability, an environmental recognition capability and a 3D structure reconstruction capability, it selects a center cloud XR server for processing the application involving the AR services.

If the UE does not have a perception capability, an environmental recognition capability and a 3D structure reconstruction capability, it selects an edge cloud XR server for processing the application involving the AR services.

In some embodiments, the UE may also be configured with an independent cloud XR server selection policy for instructing the UE to select a cloud XR server to process the XR application based on the matching result between its own capabilities and the UE capability required by the XR application. The selected policy may be the same as the above selection policy or other selection policy, which is not specifically limited here.

In some embodiments, the UE policy further includes information of the cloud XR server, and the cloud XR server selection method further includes:
after selecting a cloud XR server for processing the detected XR application based on the matching result, associating the detected XR application with a protocol data unit (PDU) session based on the routing information of the cloud XR server.

In an embodiment, the UE policy received by the UE may further include the routing information of the cloud XR server.

In some embodiments, the routing information of the cloud XR server may include one or more of:
a fully qualified domain name, FQDN;
an internet protocol, IP, address; or
a cloud type identifier, where the cloud type identifier may be used for distinguishing between the edge cloud XR server and the center cloud XR server.

In one embodiment, the routing information of the XR server may separately contain the routing information of the center cloud XR server and the routing information of the edge cloud XR server.

In one embodiment, the routing information of the cloud XR server may include a cloud type identifier, where the cloud type identifier is used for distinguishing between the edge cloud XR server and the center cloud XR server.

In some embodiments, the routing information of the cloud XR server may further include other information that may serve as a route identifier of the cloud XR server, which is not specifically limited here.

In case that the UE selects the corresponding cloud XR server to process the detected XR application based on the matching result, it routes and selects the cloud XR server based on the routing information of the cloud XR server included in the UE policy, and associates the XR application with a protocol data unit (PDU) session on the route.

In one embodiment, in case that there is an existing PDU session that matches the routing information of the selected cloud XR server, the UE may associate the detected XR application with the existing PDU session, for example, route the traffic of the detected XR application over the existing PDU session.

For instance, if the UE selects a center cloud XR server to process the detected XR application, and determines that there is a matching existing PDU session based on the routing information of the center cloud XR server, the UE may route the traffic of the detected XR application over the existing PDU session.

In one embodiment, in case that there is no existing PDU session that matches the routing information of the selected cloud XR server, the UE may establish a new PDU session based on the routing information of the selected cloud XR server, and then associate the detected XR application with the newly established PDU session.

For instance, if the UE selects an edge cloud XR server to process the detected XR application, and determines that there is no matching existing PDU session based on the routing information of the edge cloud XR server, the UE may establish a new PDU session based on the routing information of the edge cloud XR server, and route the traffic of the detected XR application over the new PDU session.

In some embodiments, the UE policy includes a UE route selection policy (URSP), and a traffic descriptor of the URSP includes the UE capability required by the XR application.

In an embodiment, the UE policy received by the UE may include a UE route selection policy (URSP). The traffic descriptor of the URSP may include the UE capability required by the XR application included in the UE policy.

In one embodiment, by adding UE capability-related options to the traffic descriptor of the URSP, the traffic descriptor may include the UE capability required by the XR application.

For example, by adding the following options to the traffic descriptor of the URSP, the traffic descriptor may include the UE capability required by the XR application:

| | |
|---|---|
| UE capabilities | The UE capabilities are matched with the information requested by a UE application when it requests a Cloud XR Service with certain capabilities. |

In some embodiments, in case that the UE policy includes a URSP, a route selection descriptor of the URSP may include the routing information of the cloud XR server.

In one implementation, by adding edge cloud XR server and center cloud XR server options to the route selection descriptor of the URSP, the route selection descriptor may include the routing information of the cloud XR server.

For example, by adding the following options to the route selection descriptor of the URSP, the route selection descriptor may include the routing information of the cloud XR server:

| | |
|---|---|
| Edge cloud XR service selection | Either a single value or a list of values of edge cloud XR Service. |
| Center cloud XR service selection | Either a single value or a list of values of center cloud XR Service. |

In one embodiment, by adding only one cloud XR server option to the route selection descriptor of the URSP, and adding a cloud type identifier to the option to represent the edge cloud XR server and the center cloud XR server, the route selection descriptor may include the routing information of the cloud XR server.

For example, by adding the following options to the route selection descriptor of the URSP, the route selection descriptor may include the routing information of the cloud XR server:

| | |
|---|---|
| Cloud XR service selection | Either a single value or a list of values of cloud XR service which marked as edge or center. |

In some embodiments, the UE policy received by the UE may include an independent cloud XR server selection policy, where the independent cloud XR server selection policy may be a newly defined policy in the UE policy. The independent cloud XR server selection policy may include the UE capability required by the XR application and the routing information of the cloud XR server.

In some embodiments, the cloud XR server selection method further includes:
receiving UE policy container information transmitted from the AMF, where the UE policy container information includes an updated UE policy.

In an embodiment, when updating the UE policy, the policy control function (PCF) may include the updated UE policy in the UE policy container information and transmit it to the AMF, and the AMF then forwards the UE policy container information to the UE.

The UE policy may be updated when the routing information of the cloud XR server changes, or when the UE capability required by the XR application change, or in other situations where the UE policy needs to be updated, which are not specifically limited here.

FIG. 2 is a second flow chart of a cloud XR server selection method according to an embodiment of the present application. As shown in FIG. 2, the cloud XR server selection method is performed by a policy control function (PCF) and includes the following steps.

At step 200, transmit a user equipment (UE) policy to an access and mobility management function (AMF), where the UE policy includes a UE capability required by an XR application.

In an embodiment, before a UE needs to process the XR application, the PCF may transmit a UE policy to the AMF. The UE policy may include the UE capability required by the XR application, which are used to instruct the UE to select an appropriate cloud XR server for processing the XR application.

In one embodiment, the services provided by the cloud XR server may match the UE capability required by the XR application. For example, the services provided by the cloud XR server may satisfy the requirements of the XR application.

The PCF in the embodiments of the present application may be the PCF in a 5G system, or a network element with the same function as the PCF in a future network system (e.g., a 6G system), which is not specifically limited here.

The AMF in the embodiment of the present application may be a AMF in the 5G system, or may be a network element with the same function as the AMF in a future network system (e.g., a 6G system), which is not specifically limited here.

In some embodiments, the UE capability required by the XR application may include one or more of:
a video rendering capability;
a 3D stitching capability;
a binaural rendering panoramic audio capability;
a perception capability;
an environmental recognition capability; or
a 3D structure reconstruction capability.

In some embodiments, the UE capability required by the XR application may further include other UE capabilities required when processing the XR application, which are not specifically limited here.

In one embodiment, in case of the XR application being a video application, the UE capability required by the XR application may be a video rendering capability.

In one embodiment, in case of the XR application being a binaural panoramic audio application, the UE capability required by the XR application may be a binaural rendering panoramic audio capability.

In one embodiment, in case of the XR application being a cloud gaming application, the UE capability required by the XR application may be a video rendering capability, a 3D stitching capability, and a binaural rendering panoramic audio capability.

In one embodiment, in case of the XR application being an application involving AR services, the UE capability required by the XR application may be a perception capability, an environmental recognition capability, and a 3D structure reconstruction capability.

In the cloud XR server selection method according to the embodiment of the present application, by including a UE capability required by an XR application in a UE policy transmitted from the PCF to the AMF, and the UE may select the cloud XR server to process an XR application based on its own capabilities, reducing the latency of XR services and the waste of computing resources.

In some embodiments, the UE policy further includes routing information of the cloud XR server.

In an embodiment, the UE policy transmitted from the PCF to the AMF may further include the routing information of the cloud XR server.

In some embodiments, the routing information of the cloud XR server may include one or more of:
a fully qualified domain name, FQDN;
an internet protocol, IP, address; or
a cloud type identifier, where the cloud type identifier may be used for distinguishing between the edge cloud XR server and the center cloud XR server.

In one embodiment, the routing information of the XR server may include routing information of the center cloud XR server and routing information of the edge cloud XR server, respectively.

In one implementation, the routing information of the cloud XR server may include a cloud type identifier, where the cloud type identifier is used for distinguishing between the edge cloud XR server and the center cloud XR server.

In some embodiments, the routing information of the cloud XR server may further include other information that may serve as a route identifier of the cloud XR server, which is not specifically limited here.

In some embodiments, the UE policy includes a UE route selection policy (URSP), and a traffic descriptor of the URSP includes the UE capability required by the XR application.

In an embodiment, the UE policy transmitted from the PCF to the AMF may include the URSP. The traffic descriptor of the URSP may include the UE capability required by the XR application included in the UE policy.

In one embodiment, by adding UE capability-related options to the traffic descriptor of the URSP, the traffic descriptor may include the UE capability required by the XR application.

For example, by adding the following options to the traffic descriptor of the URSP, the traffic descriptor may include the UE capability required by the XR application:

| | |
|---|---|
| UE Capabilities | The UE capabilities are matched with the information requested by a UE application when it requests a Cloud XR Service with certain capabilities. |

In some embodiments, in case that the UE policy includes a URSP, the route selection descriptor of the URSP may include the routing information of the cloud XR server.

In one embodiment, by adding edge cloud XR server and center cloud XR server options to the route selection descriptor of the URSP, the route selection descriptor may include the routing information of the cloud XR server.

For example, by adding the following options to the route selection descriptor of the URSP, the route selection descriptor may include the routing information of the cloud XR server:

| | |
|---|---|
| Edge cloud XR service selection | Either a single value or a list of values of Edge Cloud XR Service. |
| Center cloud XR service selection | Either a single value or a list of values of Center Cloud XR Service. |

In one embodiment, by adding only one cloud XR server option to the route selection descriptor of the URSP, and adding a cloud type identifier to the option to represent the edge cloud XR server and the center cloud XR server, the route selection descriptor may include the routing information of the cloud XR server.

For example, by adding the following options to the route selection descriptor of the URSP, the route selection descriptor may include the routing information of the cloud XR server:

| | |
|---|---|
| Cloud XR service selection | Either a single value or a list of values of Cloud XR Service which marked as Edge or Center. |

In some embodiments, the UE policy transmitted from the PCF to the AMF may include an independent cloud XR server selection policy, where the independent cloud XR server selection policy may be a newly defined policy in the UE policy. The independent cloud XR server selection policy may include the UE capability required by the XR application and the routing information of the cloud XR server.

In some embodiments, the cloud XR server selection method further includes:
acquiring the UE capability required by the XR application from user subscription data or from an application function (AF); or,
determining the UE capability required for the XR application based on a capability set required by general XR services.

In an embodiment, before the PCF transmits the UE policy to the AMF, the PCF may obtain the UE capability required by the XR application from user subscription data, an application function (AF), a capability set required by general XR services, or other methods, which are not specifically limited here.

In some embodiments, the cloud XR server selection method further includes:
acquiring the routing information of the cloud XR server from an application function, AF; or,
configuring the routing information of the cloud XR server based on user location information.

In an embodiment, before the PCF transmits the UE policy to the AMF, the PCF may acquire the routing information of the cloud XR server from the AF. The PCF may also configure the routing information of the cloud XR server based on user location information. For example, based on the user location information, the routing information of the cloud XR server within a certain range near the user may be configured as the routing information of the cloud XR server. The PCF may also acquire the routing information of the cloud XR server via other means, which are not specifically limited here.

In some embodiments, the cloud XR server selection method further includes:
transmitting UE policy container information to the AMF, where the UE policy container information includes the updated UE policy.

In an embodiment, when updating the UE policy, the PCF may also transmit UE policy container information to the AMF, where the UE policy container information may include an updated UE policy.

The UE policy may be updated when the routing information of the cloud XR server changes, or when the UE capability required by the XR application change, or in other situations where the UE policy needs to be updated, which are not specifically limited here.

The methods according to the various embodiments of the present application are based on the same application concept. Therefore, the implementation of these methods may refer to each other, and the repeated description will not be provided.

The methods according to the above embodiments of the present application are exemplified through examples of specific application scenarios as follows.

### Example 1: The UE policy includes the URSP for selecting a cloud XR server.

### 1. Extending a UE route selection policy

A UE capability-related field to the service description section of the URSP is added:

| | |
|---|---|
| UE capabilities | The UE capabilities are matched with the information requested by a UE application when it requests a Cloud XR Service with certain capabilities. |

The UE capability mentioned above include, but are not limited to, the following:
a video rendering capability;
a 3D stitching capability;
a binaural rendering panoramic audio capability;
a perception capability;
capabilities required by other XR applications for processing; and
for AR services, the capabilities such as environmental recognition, perception, and reconstruction of 3D structures (or simultaneous localization and mapping (SLAM) maps) from the video of the UE perception camera.

Adding fields related to the routing information of the XR server to the route selection description section of the URSP:

Method 1: Adding edge cloud XR server and center cloud XR server options separately.

| | |
|---|---|
| Edge cloud XR service selection | Either a single value or a list of values of Edge cloud XR service. |
| Center cloud XR service selection | Either a single value or a list of values of Center cloud XR service. |

Method 2: Adding only one cloud XR server option and adding an identifier in the option to distinguish between the edge cloud XR server and the center cloud XR server.

| | |
|---|---|
| Cloud XR service selection | Either a single value or a list of values of cloud XR service which marked as edge or center. |

The routing information of the above XR servers mainly includes:
an FQDN;
an IP address;
an edge or center cloud XR server identifier (this information is required in method 2 to distinguish between cloud server types); and
other information that may be used as route identifiers.

2. Acquiring, by the PCF, the UE capability (list) required by URSP and the routing information of the cloud XR server.

The UE capability (list) may be acquired from user subscription data, the AF, or a capability set required by general XR services. This example does not limit how the PCF acquires the UE capability.

The routing information of the cloud XR server may be acquired via the AF, and may be configured in association with the location area where the user is located. This example does not limit how the PCF acquires the information.

It is recommended that the services of the edge cloud or center cloud XR server match the UE capability (list) to prevent the cloud selected by the UE based on the URSP from failing to satisfy the requirements of the current XR application. This is not limited in the example.

3. Adding the UE capability service description options and the routing information of the cloud XR server when the PCF issues the URSP policy.

4.Selecting a cloud XR server according to the following steps when the UE needs to perform XR services:
1) UE capabilities that match the service description rules of an XR application, specified in the service description rules:
   a video rendering capability;
   a 3D stitching capability;
   a binaural rendering panoramic audio capability; and
   other capabilities required for cloud-based XR.
2) Acquiring, by the XR application, the corresponding routing information of the cloud XR server based on the matching result.

The UE flexibly selects either the edge cloud or center cloud XR server as a route result according to needs.

### Example 2: Adding UE capability and edge cloud/center cloud information in the UE route selection policy (URSP) of the UE registration procedure.

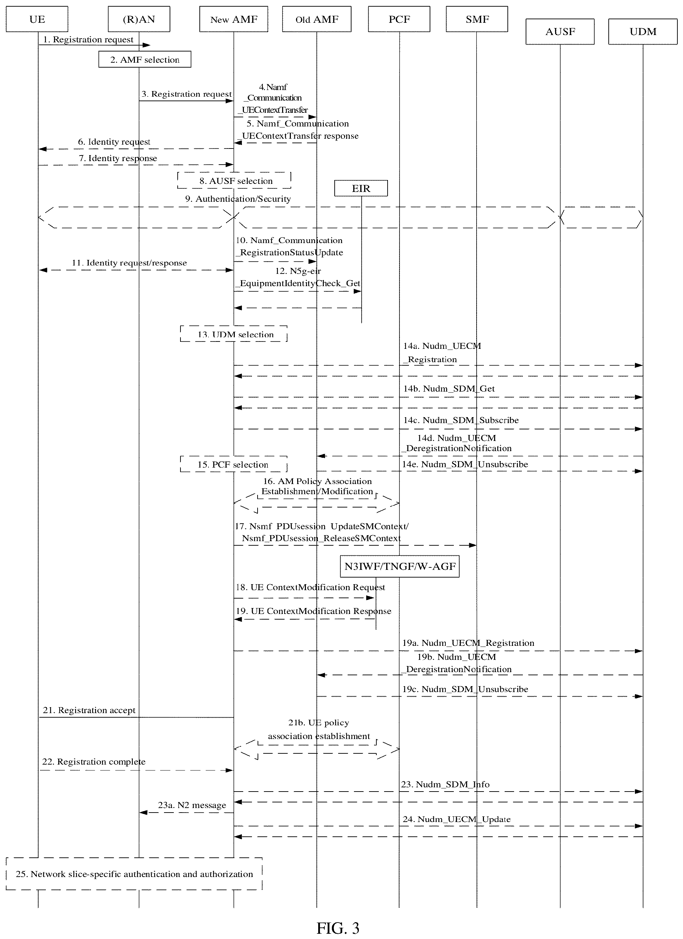

FIG. 3 is a schematic flowchart of adding UE capability and edge cloud/center cloud information to a UE route selection policy (URSP) during a UE registration procedure according to an embodiment of the present application. As shown in FIG. 3, the procedure includes the following steps.
1. A terminal (also called as user equipment (UE)) transmits a registration request to an access network (AN) or a radio access network (RAN) (Registration Request).
2. (R)AN selects an appropriate AMF according to the parameters carried by the UE (AMF selection).
3. (R)AN transmits a registration request to a new AMF (Registration Request).
4. The new AMF transmits a UE context request to an old AMF(Namf_Communication_UEContextTransfer).
5. The old AMF responds to the UE context request transmitted from the New AMF (Namf_Communication_UEContextTransfer response).
6. The new AMF transmits an identity request to the UE (Identity Request).
7. The UE responds to the identity request transmitted from the new AMF (Identity Response).
8. The new AMF selects an appropriate authentication server function (AUSF) (AUSF selection).
9. The new AMF requests authentication from the AUSF, where the AUSF acquires an identity authentication data from a unified data management (UDM) function and authenticates the UE via the AMF. If the non-access stratum (NAS) security context does not exist, a NAS security initialization is performed (Authentication/Security).
10. The new AMF notifies the old AMF of the UE's registration result and updates the registration status (Namf_Communication_RegistrationStatusUpdate).
11. The new AMF transmits an identity request to the UE to acquire a permanent equipment identifier (PEI), and the UE responds to the identity request of the new AMF (Identity Request/Response).
12. The new AMF retrieves information from the equipment identification register (EIR) and checks the PEI of the UE (N5g-eir_EquipmentldentityCheck_Get).
13. The new AMF selects the UDM according to the subscription permanent identifier (SUPI) (UDM selection).
14a. The new AMF registers the UE with the UDM (Nudm_UECM_Registration).
14b. If the new AMF does not have the subscription data of the UE, it retrieves an access and mobility subscription data from the UDM (Nudm_SDM_Get).
14c. If the requested data is modified, it subscribes to the data from the UDM (Nudm_SDM_Subscribe).
14d. The UDM notifies the old AMF of the UE deregistration (Nudm_UECM_DeregistrationNotification).
14e. The old AMF unsubscribes to the data from the UDM (Nudm_SDM_Unsubscribe).
15. The new AMF selects an appropriate PCF (PCF selection).
16. The new AMF establishes/modifies an association with the selected PCF via an access and mobility management (AM) policy (AM Policy Association Establishment/Modification).
17. The new AMF requests a session management function (SMF) to update/release the PDU session (Nsmf_PDUsession_UpdateSMContext/Nsmf_PDUsession_ReleaseSMContext).
18. If the new AMF and the old AMF are in the same public land mobile network (PLMN), the new AMF transmits a UE context modification request to a non-3GPP Interworking function (N3IWF)/trusted non-3GPP gateway function (TNGF)/wireline access gateway function (W-AGF) (UE ContextModification Request).
19. The N3IWF/TNGF/W-AGF responds to the UE context modification request of the new AMF (UE ContextModification Response).
19a. After the UE context is modified, the new AMF re-registers the UE with the UDM (Nudm_UECM_Registration).
19b. The UDM notifies the old AMF of the UE deregistration (Nudm_UECM_DeregistrationNotification).
19c. The old AMF unsubscribes to the data from the UDM (Nudm_SDM_Unsubscribe).
21. The new AMF notifies the UE of registration acceptance (Registration Accept).
21b. The new AMF transmits a UE policy establishment request to the PCF, the PCF responds to the UE policy establishment request transmitted from the new AMF, completes the association establishment of the UE policy, and adds UE capability and edge cloud/center cloud information to the UE route selection policy (URSP) (UE Policy Association Establishment).
22. The UE transmits a registration complete message to the new AMF (Registration Complete).
23. The new AMF provides the UDM with UE confirmation information (Nudm_SDM_Info).
23a. The new AMF provides the (R)AN with UE confirmation information via the N2 message (N2 message).
24. The new AMF transmits a "uniform support for IP multimedia subsystem (IMS) voice over packet switched (PS) sessions" indication to the UDM (Nudm_UECM_Update).
25. Network slice-specific authentication and authorization (Network Slice-Specific Authentication and Authorization).

The way for the PCF to acquire edge cloud/center cloud routing information may be the same as the related art, or other ways may be used, which are not specifically limited here.

The scenario of UE policy association establishment is not limited to the initial registration of the UE with the network.

### Example 3: Adding UE capability and edge cloud/center cloud information during a process for updating UE route selection policy (URSP) by PCF.

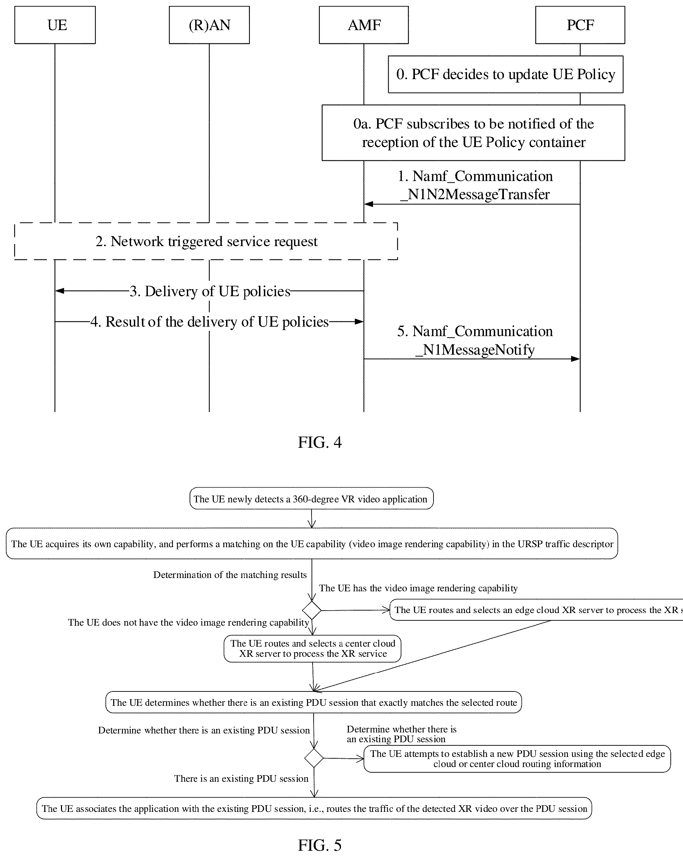

FIG. 4 is a schematic diagram of adding UE capability and edge cloud/center cloud information during a procedure for updating a UE route selection policy (URSP) by a policy control function (PCF) according to an embodiment of the present application. As shown in FIG. 4, the procedure includes the following steps.
0. In the existing scenarios, a mechanism is added to trigger the PCF to decide to update the UE policy due to certain conditions (e.g., changes in available edge cloud/center cloud routing information) (PCF decides to update UE Policy).
0a. The PCF subscribes to be notified of the reception of the UE policy container.
1. The PCF adds extended UE capability and edge cloud/center cloud routing information to the UE policy container of the message transferred to the AMF (Namf_Communication_N1N2MessageTransfer).
2. The network triggers a service request (Network Triggered Service Request).
3. The AMF delivers the UE policies to the UE (Delivery of UE policies).
4. The UE updates the UE policies (including URSP) provided by the PCF, supports the newly extended UE capability and edge cloud/center cloud information for processing the URSP, and delivers the updated result to the AMF (Result of the delivery of UE policies).
5. The AMF notifies the PCF that the UE policy update is complete (Namf_Communication_N1MessageNotify).

The way for the PCF to acquire edge cloud/center cloud routing information may be the same as the related art, or other ways may be used, which are not specifically limited here.

The scenario of UE Policy association modification is not limited to being actively triggered by the PCF, and may also be other scenarios where the PCF passively updates the UE policy.

### Example 4: UE processing a 360-degree virtual reality (VR) video application.

FIG. 5 is a schematic flowchart for a UE to process a VR video application according to an embodiment of the present application. As shown in FIG. 5, the procedure includes the following steps.
1. The UE newly detects a 360-degree VR video application, and evaluates the URSP rule in order of rule priority.
2. The UE acquires its own capability (video image rendering capability), performs a matching on the UE capability (video image rendering capability) in the URSP traffic descriptor, and selects an appropriate cloud XR server to process the cloud XR service based on the matching result:
   if the UE does not have the video image rendering capability, it routes and selects an edge cloud XR server to process the XR service.
   if the UE has the video image rendering capability, it routes and selects a center cloud XR server to process the XR service.
3. After the route selection is complete, the UE determines whether there is an existing PDU session that exactly matches the selected route:
   if there is an existing PDU session, the UE associates the application with the existing PDU session, for example, routes the traffic of the detected XR video over the PDU session;
   if there is no existing PDU session, the UE attempts to establish a new PDU session using the selected edge cloud or center cloud routing information.

### Example 5: UE processing a binaural rendering panoramic audio application.

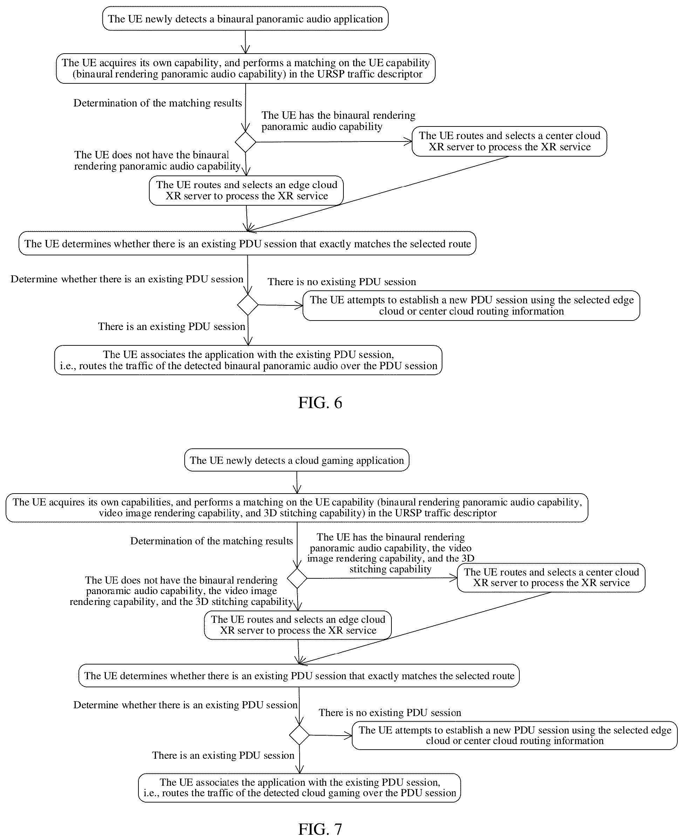

FIG. 6 is a schematic flowchart for a UE to process a binaural rendering panoramic audio application according to an embodiment of the present application. As shown in FIG. 6, the procedure includes the following steps:
1. The UE newly detects a binaural panoramic audio application, and evaluates the URSP rule in order of rule priority.
2. The UE acquires its own capability (binaural rendering panoramic audio capability), performs a matching on the UE capability (binaural rendering panoramic audio capability) in the URSP traffic descriptor, and selects an appropriate cloud XR server to process the cloud XR service based on the matching result:
   if the UE does not have the binaural rendering panoramic audio capability, it routes and selects an edge cloud XR server to process the XR service;
   if the UE has the binaural rendering panoramic audio capability, it routes and selects a center cloud XR server to process the XR service.
3. After the route selection is complete, the UE determines whether there is an existing PDU session that exactly matches the selected route:
   if there is an existing PDU session, the UE associates the application with the existing PDU session, for example, routes the traffic of the detected binaural panoramic audio over the PDU session.
   if there is no existing PDU session, the UE attempts to establish a new PDU session using the selected edge cloud or center cloud routing information.

### Example 6: UE processing a cloud gaming application.

FIG. 7 is a schematic flowchart for a UE to process a cloud gaming application according to an embodiment of the present application. As shown in FIG. 7, the procedure includes the following steps.
1. The UE newly detects a cloud gaming application, and evaluates the URSP rule in order of rule priority.
2. The UE acquires its own capabilities (binaural rendering panoramic audio capability, video image rendering capability, and 3D stitching capability), performs a matching on the UE capability (binaural rendering panoramic audio capability, video image rendering capability, and 3D stitching capability) in the URSP traffic descriptor, and selects an appropriate cloud XR server to process the cloud XR service based on the matching result:
   if the UE does not have the binaural rendering panoramic audio capability, the video image rendering capability, and the 3D stitching capability, it routes and selects an edge cloud XR server to process the XR service;
   if the UE has the binaural rendering panoramic audio capability, the video image rendering capability, and the 3D stitching capability, it routes and selects a center cloud XR server to process the XR service.
   The UE capability may cover multiple dimensions. Whether all the capabilities required by the application must be fully satisfied may be flexibly determined by the UE, which is not specifically limited here.
3. After the route selection is complete, the UE determines whether there is an existing PDU session that exactly matches the selected route:
   if there is an existing PDU session, the UE associates the application with the existing PDU session, for example, routes the traffic of the detected cloud gaming over the PDU session;
   if there is no existing PDU session, the UE attempts to establish a new PDU session using the selected edge cloud or center cloud routing information.

In accordance with the protocols, an application may be matched with the traffic descriptors of different URSP rules and be associated with different PDU sessions simultaneously.

Cloud gaming may require real-time information synchronization of global games, where the information synchronization method between the edge cloud and the center cloud is not specifically limited here.

Whether the UE capability (list) provided by the URSP are fully matched or partially matched is flexibly determined by the UE application, which is not specifically limited here.

### Example 7: UE processing AR application.

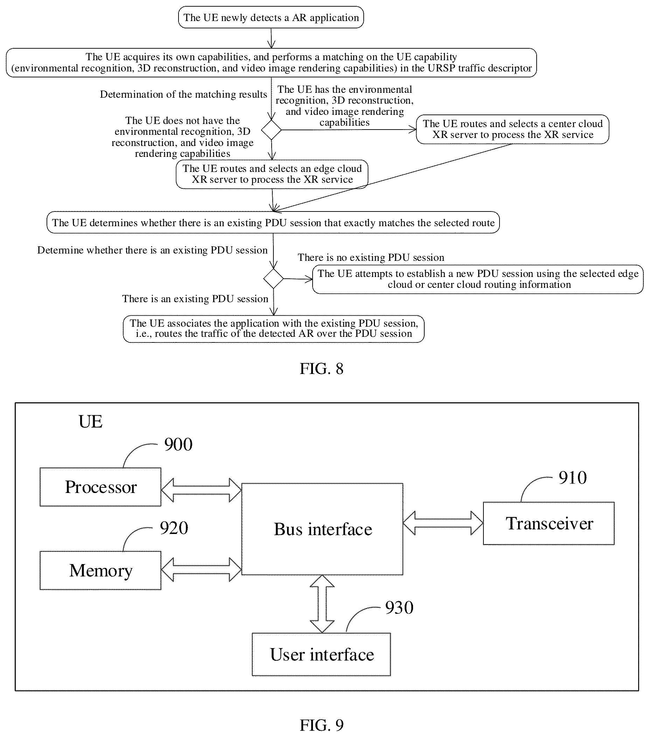

FIG. 8 is a schematic flowchart for a UE to process an AR application according to an embodiment of the present application. As shown in FIG. 8, the procedure includes the following steps.
1. The UE newly detects an AR application, and evaluates the URSP rule in order of rule priority.
2. The UE acquires its own capabilities (environmental recognition, 3D reconstruction, and video image rendering capabilities), performs a matching on the UE capability (environmental recognition, 3D reconstruction, and video image rendering capabilities) in the URSP traffic descriptor, and selects an appropriate cloud XR server to process the cloud XR service based on the matching result:
   if the UE does not have the environmental recognition, 3D reconstruction, and video image rendering capabilities, it routes and selects an edge cloud XR server to process the XR service.
   if the UE has the environmental recognition, 3D reconstruction, and video image rendering capabilities, it routes and selects a center cloud XR server to process the XR service.
3. After route selection is complete, the UE determines whether there is an existing PDU session that exactly matches the selected route:
   if there is an existing PDU session, the UE associates the application with the existing PDU session, i.e., routes the traffic of the detected AR over the PDU session.
   if there is no existing PDU session, the UE attempts to establish a new PDU session using the selected edge cloud or center cloud routing information.

Environmental recognition of the AR may rely on geographic area information data. If the edge cloud lacks such relevant information, it may be synchronized from the center cloud to the edge cloud, which is not specifically limited here.

The embodiments in the present application solve the problem that UEs cannot select either an edge cloud or a center cloud XR server to process the XR service based on their own capabilities and demands, increasing the flexibility of UE processing and improving the cloud XR service experience.

The methods and apparatus according to the various embodiments of the present application are based on the same application concept. Since the methods and apparatus solve problems based on similar principles, the implementation of the apparatus and methods may refer to each other, and the repeated descriptions will not be provided.

FIG. 9 is a schematic structural diagram of a UE according to an embodiment of the present application. As shown in FIG. 9, the UE includes a memory 920, a transceiver 910, and a processor 900, where the processor 900 and the memory 920 may also be physically arranged separately.

The memory 920 is used for storing a computer program, and the transceiver 910 is used for receiving and transmitting data under control of the processor 900.

In an embodiment, the transceiver 910 is used for receiving and transmitting data under control of the processor 900.

As shown in FIG. 9, a bus architecture may include any number of interconnected buses and bridges, which are linked together through various circuits of one or more processors represented by the processor 900 and a memory represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, providing a unit for communication with various other devices over transmission media including wireless channels, wired channels, fiber optic cables, and the like. For different user devices, a user interface 930 may also be an interface that may be connected to external and internal devices, and the connected devices include but are not limited to keypads, displays, speakers, microphones, joysticks, etc.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), and the processor may also use a multi-core architecture.

The processor 900 calls the computer program stored in the memory 920 to execute any of the methods provided by the embodiments of the present application according to the obtained executable instructions, for example, receiving a UE policy transmitted from an access and mobility management function (AMF), where the UE policy includes a UE capability required by the XR application;
performing UE capability matching on a detected XR application based on the UE capability required by the XR application and selecting a cloud XR server for processing the detected XR application based on a matching result.

In some embodiments, selecting the cloud XR server for processing the detected XR application based on the matching result includes:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

In some embodiments, the UE policy further includes routing information of the cloud XR server, and the operations further include:
after selecting the cloud XR server for processing the detected XR application based on the matching result, associating the detected XR application with a protocol data unit (PDU) session based on the routing information of the cloud XR server.

In some embodiments, associating the detected XR application with the PDU session based on the routing information of the cloud XR server includes:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the operations further include:
receiving UE policy container information transmitted from the AMF, where the UE policy container information includes an updated UE policy.

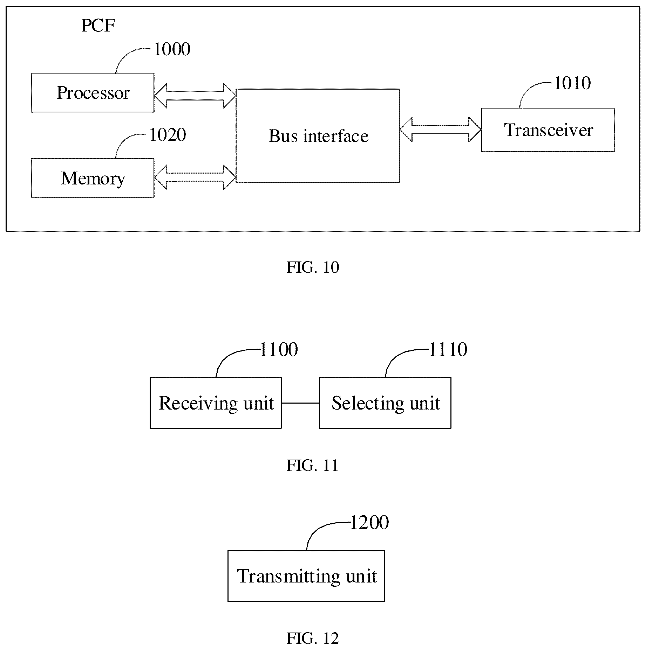

FIG. 10 is a schematic structural diagram of a policy control function (PCF) according to an embodiment of the present application. As shown in FIG. 10, the PCF includes a memory 1020, a transceiver 1010, and a processor 1000, where the processor 1000 and the memory 1020 may also be physically arranged separately.

The memory 1020 is used for storing computer programs, and the transceiver 1010 is used for receiving and transmitting data under control of the processor 1000.

In an embodiment, the transceiver 1010 is used for receiving and transmitting data under control of the processor 1000.

In FIG. 10, a bus architecture may include any number of interconnected buses and bridges, which are linked together through various circuits of one or more processors represented by the processor 1000 and a memory represented by the memory 1020. The bus architecture may also link together various other circuits, such as peripherals, voltage regulators, and power management circuits, etc., which are well known in the art, and therefore are not further described in the present application. The bus interface provides an interface. The transceiver 1010 may include multiple elements, i.e., including a transmitter and a receiver, providing a unit for communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a CPU, an ASIC, an FPGA, or a CPLD, and the processor may also adopt a multi-core architecture.

The processor 1000 calls the computer program stored in the memory 1020 to execute any of the methods provided by the embodiments of the present application according to the obtained executable instructions, for example, transmitting a UE policy to an access and mobility management function, AMF, where the UE policy includes a UE capability required by a XR application.

In some embodiments, the UE policy further includes routing information of a cloud XR server.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the operations further include:
acquiring the UE capability required by the XR application from user subscription data or via application function, AF; or,
determining the UE capability required for XR applications based on a capability set required by general XR services.

In some embodiments, the operations further include:
acquiring the routing information of the cloud XR server from an application function, AF; or,
configuring the routing information of the cloud XR server based on user location information.

In some embodiments, the operations further include:
transmitting UE policy container information to the AMF, where the UE policy container information includes the updated UE policy.

It should be noted here that the above-mentioned UE and PCF provided by the embodiment of the present application may implement all the steps of the method implemented in the above-mentioned the embodiments of the method, and may achieve the same technical effect. The parts of the embodiment that are identical to the embodiments in the method and the beneficial effects thereof will not be described in detail here.

FIG. 11 is a first schematic structural diagram of a cloud XR server selection apparatus according to an embodiment of the present application. As shown in FIG. 11, the cloud XR server selection apparatus includes:
a receiving unit 1100, used for receiving a user equipment, UE, policy transmitted from an access and mobility management function, AMF, where the UE policy includes a UE capability required by the XR application, and
a selecting unit 1110, used for performing UE capability matching on a detected XR application based on the UE capability required by the XR application and selecting a cloud XR server for processing the detected XR application based on a matching result.

In some embodiments, selecting the cloud XR server for processing the detected XR application based on the matching result includes:
in case that the UE has all or part of the UE capability required by the detected XR application, selecting the center cloud XR server for processing the detected XR application; or,
in case that the UE does not have the UE capability required by the detected XR application, selecting an edge cloud XR server for processing the detected XR application.

In some embodiments, the UE policy further includes routing information of the cloud XR server, and the cloud XR server selection apparatus further includes:
an associating unit, used for associating the detected XR application with a protocol data unit, PDU, session based on the routing information of the cloud XR server after selecting the cloud XR server for processing the detected XR application based on the matching result.

In some embodiments, associating the detected XR application with the PDU session based on the routing information of the cloud XR server includes:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

In some embodiments, the UE capability required by the XR application include one or more of:
a video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the receiving unit 1100 is further used for:
receiving UE policy container information transmitted from the AMF, where the UE policy container information includes an updated UE policy.

FIG. 12 is a second schematic structural diagram of a cloud XR server selection apparatus according to an embodiment of the present application. As shown in FIG. 12, the cloud XR server selection apparatus includes:
a transmitting unit 1200, used for transmitting a user equipment, UE, policy to an access and mobility management function, AMF, where the UE policy includes a UE capability required by the XR application.

In some embodiments, the UE policy further includes routing information of the cloud XR server.

In some embodiments, the UE capability required by the XR application include one or more of:
a Video rendering capability;
a 3D stitching capability;
a binaural rendering panoramic audio capability;
a perception capability;
an environmental recognition capability; or
a 3D structure reconstruction capability.

In some embodiments, the routing information of the cloud XR server includes one or more of:
a fully qualified domain name, FQDN;
an internet protocol, IP, address; or
a cloud type identifier, where the cloud type identifier is used for distinguishing between the edge cloud XR server and the center cloud XR server.

In some embodiments, the UE policy includes a UE route selection policy, URSP, and a traffic descriptor of the URSP includes the UE capability required by the XR application.

In some embodiments, a route selection descriptor of the URSP includes the routing information of the cloud XR server.

In some embodiments, the cloud XR server selection apparatus further includes:
a first acquiring unit, used for acquiring the UE capability required by the XR application from user subscription data or from an application function, AF; or,
determining the UE capability required for XR applications based on a capability set required by general XR services.

In some embodiments, the cloud XR server selection apparatus further includes:
a second acquiring unit, used for acquiring the routing information of the cloud XR server from an application function, AF; or,
configuring the routing information of the cloud XR server based on user location information.

In some embodiments, the transmitting unit 1200 is further used for:
transmitting UE policy container information to the AMF, where the UE policy container information includes the updated UE policy.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of either a hardware or a software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, a server, or a network device, etc.) or a processor to perform all or part of the steps of the methods described in the embodiments of the present application. The storage medium described above includes various media that may store program codes, such as a U disk, a mobile hard disk, a read-only memory (ROM), a random access memory (RAM), a magnetic disk, or a compact disk.

It should be noted here that the above-mentioned apparatus provided by the embodiment of the present application may implement all the steps of the method implemented in the above-mentioned embodiments of the method, and may achieve the same technical effect. The parts of the embodiment that are identical to the embodiments in the method and the beneficial effects thereof will not be described in detail here.

According to an embodiment of the present application, a computer-readable storage medium is provided, where the computer-readable storage medium stores a computer program, and the computer program is used to cause a computer to perform the cloud XR server selection method provided by the various embodiments of the present application.

It should be noted here that the computer-readable storage medium provided by the embodiment of the present application may implement all the steps of the method implemented in the above-mentioned embodiments of the method, and may achieve the same technical effect. The parts of the embodiment that are identical to the embodiments in the method and the beneficial effects thereof will not be described in detail here.

The computer-readable storage medium may be any available medium or data storage device that may be accessed by the processor, including but not limited to disk memory (such as a floppy disk, a hard disk, a magnetic tape, a magnetooptical disk (MO)), an optical memory (such as a CD, a DVD, a BD, a HVD, etc.), and semiconductor memory (such as ROM, EPROM, EEPROM, a non-volatile memory (NAND FLASH), a solid-state drive (SSDs)), etc.

The solutions provided by the embodiments of the present application may be applied to a variety of systems, especially 5G systems. For example, applicable systems may be the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, the 5G new radio (NR) system, etc. These various systems include terminal devices and network devices. The system may further include core network parts, such as the evolved packet system (EPS), the 5G System (5GS), etc.

The terminal involved in the embodiments of the present application may refer to a device that provides voice and/or data connectivity to users, a handheld device with wireless connection function, or other processing devices connected to a wireless modem. In different systems, the terminal may also have different names. For example, in a 5G system, the terminal may be called as user equipment (UE). Wireless terminal devices may communicate with one or more core networks (CN) via a radio access network (RAN). Wireless terminal devices may be mobile terminal devices, such as mobile phones (or "cellular" phones) and computers equipped with mobile terminal devices, for example, portable, pocket-sized, handheld, computer-built-in or vehicle-mounted mobile devices, which exchange voice and/or data with the radio access network. Examples include personal communication service (PCS) phones, cordless phones, session initiated protocol (SIP) phones, wireless local loop (WLL) stations, personal digital assistants (PDAs), and other devices. The wireless terminal device may also be called as a system, a subscriber unit, a subscriber station, a mobile station, a mobile station, a remote station, an access point, a remote terminal device, an access terminal device, a user terminal device, a user agent, or a user device, but is not limited in the embodiments of the present application.

As will be appreciated by those skilled in the art, embodiments of the present application may be provided as methods, systems, or computer program products. Therefore, the embodiment of the present application may be in the form of a complete hardware, a complete software, or a combination of software and hardware.. Moreover, the present application may take the form of a computer program product implemented on one or more computer-usable storage media (including but not limited to a disk memory, an optical memory, etc.) having computer-usable program code .

The present application is described with reference to flowcharts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for implementing the functions specified in one or more flows in a flowchart and/or one or more blocks in a block diagram.

These processor-executable instructions may also be stored in a processor-readable memory capable of directing a computer or other programmable data processing device to operate in a particular manner, and the instructions stored in the processor-readable memory may result in a manufacture including instruction means, the instruction means may implement the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for implementing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A cloud extended reality, XR, server selection method, performed by a user equipment, UE, comprising:
receiving a UE policy transmitted from an access and mobility management function, AMF, wherein the UE policy comprises a UE capability required by an XR application; and
performing UE capability matching on a detected XR application based on the UE capability required by the XR application and selecting a cloud XR server for processing the detected XR application based on a matching result.

2. The cloud XR server selection method of claim 1, wherein selecting the cloud XR server for processing the detected XR application based on the matching result comprises:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

3. The cloud XR server selection method of claim 1 or 2, wherein the UE policy further comprises routing information of the cloud XR server, and the cloud XR server selection method further comprises:
after selecting the cloud XR server for processing the detected XR application based on the matching result, associating the detected XR application with a protocol data unit, PDU, session based on the routing information of the cloud XR server.

4. The cloud XR server selection method of claim 3, wherein associating the detected XR application with the PDU session based on the routing information of the cloud XR server comprises:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

5. The cloud XR server selection method of claim 1 or 2, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

6. The cloud XR server selection method of claim 3 or 4, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

7. The cloud XR server selection method of any of claims 1 to 5, wherein the UE policy comprises a UE route selection policy, URSP, and a traffic descriptor of the URSP comprises the UE capability required by the XR application.

8. The cloud XR server selection method of claim 7, wherein a route selection descriptor of the URSP comprises the routing information of the cloud XR server.

9. The cloud XR server selection method of any of claims 1 to 8, further comprising:
receiving UE policy container information transmitted from the AMF, wherein the UE policy container information comprises an updated UE policy.

10. A cloud extended reality, XR server selection method, performed by a policy control function, PCF, comprising:
transmitting a user equipment, UE, policy to an access and mobility management function, AMF, wherein the UE policy comprises a UE capability required by an XR application.

11. The cloud XR server selection method of claim 10, wherein the UE policy further comprises routing information of the cloud XR server.

12. The cloud XR server selection method of claim 10, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

13. The cloud XR server selection method of claim 11, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

14. The cloud XR server selection method of any of claims 10 to 13, wherein the UE policy comprises a UE route selection policy, URSP, and a traffic descriptor of the URSP comprises the UE capability required by the XR application.

15. The cloud XR server selection method of claim 14, wherein a route selection descriptor of the URSP comprises the routing information of the cloud XR server.

16. The cloud XR server selection method of claim 10 or 12, further comprising:
acquiring the UE capability required by the XR application from user subscription data or from an application function, AF; or,
determining the UE capability required for the XR application based on a capability set required by general XR services.

17. The cloud XR server selection method of claim 11 or 13, further comprising:
acquiring the routing information of the cloud XR server from an application function, AF; or,
configuring the routing information of the cloud XR server based on user location information.

18. The cloud XR server selection method of any of claims 10 to 15, further comprising:
transmitting UE policy container information to the AMF, wherein the UE policy container information comprises an updated UE policy.

19. A user equipment, UE, comprising a memory, a transceiver, and a processor, wherein
the memory is used for storing a computer program; the transceiver is used for receiving and transmitting data under control of the processor; and the processor is used for reading the computer program in the memory and performing following operations:
receiving a UE policy transmitted from an access and mobility management function, AMF, wherein the UE policy comprises a UE capability required by an XR application; and
performing UE capability matching on a detected XR application based on the UE capability required by the XR application and selecting a cloud XR server for processing the detected XR application based on a matching result.

20. The UE of claim 19, wherein selecting the cloud XR server for processing the detected XR application based on the matching result comprises:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

21. The UE of claim 19 or 20, wherein the UE policy further comprises routing information of the cloud XR server, and the operations further comprise:
after selecting the cloud XR server for processing the detected XR application based on the matching result, associating the detected XR application with a protocol data unit, PDU, session based on the routing information of the cloud XR server.

22. The UE of claim 21, wherein associating the detected XR application with the PDU session based on the routing information of the cloud XR server comprises:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

23. The UE of claim 19 or 20, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

24. The UE of claim 21 or 22, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

25. The UE of any of claims 19 to 23, wherein the UE policy comprises a UE route selection policy, URSP, and a traffic descriptor of the URSP comprises the UE capability required by the XR application.

26. The UE of claim 25, wherein a route selection descriptor of the URSP comprises the routing information of the cloud XR server.

27. The UE of any of claims 19 to 26, wherein the operations further comprise:
receiving UE policy container information transmitted from the AMF, wherein the UE policy container information comprises an updated UE policy.

28. A policy control function, PCF, comprising a memory, a transceiver, and a processor, wherein
the memory is used for storing a computer program; the transceiver is for receiving and transmitting data under control of the processor; and the processor is used for reading the computer program in the memory and performing following operations:
transmitting a user equipment, UE, policy to an access and mobility management function, AMF, wherein the UE policy comprises a UE capability required by an XR application.

29. The PCF of claim 28, wherein the UE policy further comprises routing information of a cloud XR server.

30. The PCF of claim 28, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

31. The PCF of claim 29, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

32. The PCF of any of claims 28 to 31, wherein the UE policy comprises a UE route selection policy, URSP, and a traffic descriptor of the URSP comprises the UE capability required by the XR application.

33. The PCF of claim 32, wherein a route selection descriptor of the URSP comprises the routing information of the cloud XR server.

34. The PCF of claim 28 or 30, wherein the operations further comprise:
acquiring the UE capability required by the XR application from user subscription data or from an application function, AF; or,
determining the UE capability required by the XR application based on a capability set required by general XR services.

35. The PCF of claim 29 or 31, wherein the operations further comprise:
acquiring the routing information of the cloud XR server from an application function, AF; or,
configuring the routing information of the cloud XR server based on user location information.

36. The PCF of any of claims 28 to 33, wherein the operations further comprise:
transmitting UE policy container information to the AMF, wherein the UE policy container information comprises an updated UE policy.

37. A cloud extended reality, XR, server selection apparatus, comprising:
a receiving unit, used for receiving a user equipment, UE, policy transmitted from an access and mobility management function, AMF, wherein the UE policy comprises a UE capability required by the XR application; and
a selecting unit, used for performing UE capability matching on a detected XR application based on the UE capability required by the XR application and selecting a cloud XR server for processing the detected XR application based on a matching result.

38. The cloud XR server selection apparatus of claim 37, wherein selecting the cloud XR server for processing the detected XR application based on the matching result comprises:
in case that the UE has all or part of the UE capability required by the detected XR application, selecting a center cloud XR server for processing the detected XR application; or,
in case that the UE does not have the UE capability required by the detected XR application, selecting an edge cloud XR server for processing the detected XR application.

39. The cloud XR server selection apparatus of claim 37 or 38, wherein the UE policy further comprises routing information of the cloud XR server, and the cloud XR server selection apparatus further comprises:
an associating unit, used for associating the detected XR application with a protocol data unit, PDU, session based on the routing information of the cloud XR server after selecting the cloud XR server for processing the detected XR application based on the matching results.

40. The cloud XR server selection apparatus of claim 39, wherein associating the detected XR application with the PDU session based on the routing information of the cloud XR server comprises:
in case that there is an existing PDU session that matches the routing information of the selected cloud XR server, associating the detected XR application with the existing PDU session; or,
in case that there is no existing PDU session that matches the routing information of the selected cloud XR server, establishing a new PDU session based on the routing information of the selected cloud XR server, and associating the detected XR application with the new PDU session.

41. The cloud XR server selection apparatus of claim 37 or 38, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

42. The cloud XR server selection apparatus of claim 39 or 40, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

43. The cloud XR server selection apparatus of any of claims 37 to 41, wherein the UE policy comprises a UE route selection policy, URSP, and a traffic descriptor of the URSP comprises the UE capability required by the XR application.

44. The cloud XR server selection device of claim 43, wherein a route selection descriptor of the URSP comprises the routing information of the cloud XR server.

45. The cloud XR server selection apparatus of any of claims 37 to 44, wherein the receiving unit is further used for:
receiving UE policy container information transmitted from the AMF, wherein the UE policy container information comprises the updated UE policy.

46. A cloud extended reality, XR, server selection apparatus, comprising:
a transmitting unit, used for transmitting a user equipment, UE, policy to an access and mobility management function, AMF, wherein the UE policy comprises a UE capability required by the XR application.

47. The cloud XR server selection apparatus of claim 46, wherein the UE policy further comprises routing information of the cloud XR server.

48. The cloud XR server selection apparatus of claim 46, wherein the UE capability required by the XR application comprise one or more of:
a video rendering capability;
a 3-dimensional, 3D, stitching capability;
a binaural rendering panoramic audio capability;
a perception capability;
an environmental recognition capability; or
a 3-dimensional, 3D, structure reconstruction capability.

49. The cloud XR server selection apparatus of claim 47, wherein the routing information of the cloud XR server comprises one or more of:
a fully qualified domain name, FQDN;
an internet protocol, IP, address; or
a cloud type identifier, wherein the cloud type identifier is used for distinguishing between the edge cloud XR server and the center cloud XR server.

50. The cloud XR server selection apparatus of any of claims 46 to 49, wherein the UE policy comprises a UE route selection policy, URSP, and a traffic descriptor of the URSP comprises the UE capability required by the XR application.

51. The cloud XR server selection apparatus of claim 50, wherein a route selection descriptor of the URSP comprises the routing information of the cloud XR server.

52. The cloud XR server selection apparatus of claim 46 or 48, further comprising:
a first acquiring unit, used for acquiring the UE capability required by the XR application from user subscription data or from an application function, AF; or,
determining the UE capability required for the XR application based on a capability set required by general XR services.

53. The cloud XR server selection apparatus of claim 47 or 49, further comprising:
a second acquiring unit, used for acquiring the routing information of the cloud XR server from an application function, AF; or,
configuring the routing information of the cloud XR server based on user location information.

54. The cloud XR server selection apparatus of any of claims 46 to 51, wherein the transmitting unit is further used for:
transmitting UE policy container information to the AMF, wherein the UE policy container information comprises an updated UE policy.

55. A computer-readable storage medium storing a computer program, wherein the computer program is used to cause a computer to perform the cloud XR server selection method of any of claims 1 to 9.

56. A computer-readable storage medium storing a computer program, wherein the computer program is used to cause a computer to perform the cloud XR server selection method of any of claims 10 to 18.
